# EUROPÄISCHE PATENTSCHRIFT

(11) **EP 0 482 398 B1**
(45) Veröffentlichungstag und Bekanntmachung des Hinweises auf die Patenterteilung: **17.04.1996**
(21) Anmeldenummer: 91116896.1
(22) Anmeldetag: 04.10.1991
(51) Int. Cl.: H01F 7/08

(54) **Elektromagnet**
Electromagnet
Electro aimant

(30) Priorität: 25.10.1990 DE 9014763 U
(43) Veröffentlichungstag der Anmeldung: 29.04.1992
(73) Patentinhaber: Schultz, Wolfgang E., Dipl.-Ing., D-87700 Memmingen (DE)
(72) Erfinder: Führer, Egon, Dipl.-Ing., W-8940 Memmingen (DE); Kleinert, Dieter, Dipl.-Ing., W-8940 Memmingen (DE); Egg, Max, W-8941 Erkheim (DE)
(74) Vertreter: Pfister, Helmut, Dipl.-Ing.

(56) Entgegenhaltungen:
- DE-A- 3 132 396
- DE-A- 3 310 021
- US-A- 4 821 774
- US-A- 4 901 974

## Beschreibung

Die Erfindung betrifft einen Elektromagnet zur Betätigung eines Ventils, mit einer Spule, die einen Kern umgibt und einem Anker, der im Spulenkörper geführt ist und sich bei der Beaufschlagung zwecks Ventilöffnung gegen den Kern bewegt, mit einer Feder zur Rückführung des Ankers und einer vom Anker getragenen Ventilplatte an dem Kern gegenüberliegenden Ankerende sowie einem Ringbund am Anker, der mit einem den Anker umgebenden, die Ankerbewegung begrenzenden, elastischen Dämpfungsglied zusammenwirkt, wobei der Anker die elastisch nachgiebig ausgebildete Ventilplatte in einer Ausnehmung aufnimmt.

In der DE-A 31 32 396 ist ein Elektromagnet der vorstehend angegebenen Gattung beschrieben. Der Ringbund trägt dabei ein elastisches Dämpfungsglied, das im Querschnitt im wesentlichen U-förmig ist und wobei der Ringbund in der U-förmigen Ausnehmung bei der Ankerbewegung beweglich ist. Am Ende der jeweiligen Ankerbewegung dämpft das Dämpfungsglied die Bewegung des Ankers über den Ringbund.

In der US-A 4 901 974 ist ein anderer Elektromagnet beschrieben, bei dem ebenfalls die Ankerbewegung in beiden Richtungen gedämpft wird. Für die Dämpfung bei der Ventilöffnungsbewegung, also bei beaufschlagter Spule ist zwischen dem Anker und dem Kern in einer Ausnehmung des Ankers ein elastisches Element vorgesehen. Die Schließbewegung des Ventils unter der Wirkung der Rückholfeder wird dagegen von einem nicht umschlossenen elastischen Ventilkörper an der Vorderseite des Ankers gedämpft.

Ventilmagnete, mit denen sich die Erfindung befaßt, haben vergleichsweise kleine Abmessungen. Der Durchmesser beträgt etwa dreißig bis vierzig Millimeter. Bei der Herstellung muß daher eine hohe Genauigkeit angewandt werden. Insbesondere sollen die unvermeidbaren Toleranzen nicht dazu führen, daß die einwandfreie Funktion des Ventilmagneten beeinträchtigt wird. Die hohe Genauigkeit führt aber bei den kleinen Abmessungen zu einem verhältnismäßig großen Herstellungsaufwand.

Um den Verschleiß möglichst gering zu halten und die Präzision der Ventilbewegung möglichst lang aufrechtzuerhalten, ist es notwendig, die Ankerbewegungen hinreichend zu dämpfen. Um die Beanspruchung der Dämpfungsglieder möglichst gering zu halten, müssen diese ausreichend dimensioniert werden. Wegen der geringen Abmessungen des Elektromagneten ist es schwierig, ausreichend Raum zu finden, um ausreichend große Dämpfungsglieder unterzubringen.

Bei dem Elektromagneten gemäß DE-A 31 32 396 wird das Dämfungsglied in beiden Bewegungsrichtungen beansprucht, was die Lebensdauer vermindert.

Die Anordnung eines Dämpfungsgliedes im Luftspalt zwischen dem Anker und dem Kern, wie diese aus der US-A 4 001 974 hervorgeht, verringert den für den magnetischen Fluß zur Verfügung stehenden Querschnitt. Das Dämpfungsglied kann nicht in ausreichender Größe vorgesehen werden.

Es ist ein Ziel der Erfindung, eine Anordunung vorzuschlagen, die bei unveränderter Funktionstüchtigkeit und hoher Lebensdauer verhältnismäßig einfach herstellbar ist.

Zur Lösung dieser Aufgabe geht die Erfindung aus von einem Elektromagneten der eingangs angegebenen Gattung. Erfindungsgemäß wird vorgeschlagen, daß der Ringbund von einer sich bis zum ventilseitigen Ende des Ankers erstreckenden Abstufung gebildet ist, die die Ventilplatte umgibt, wobei der Durchmesser der Ausnehmung zur Aufnahme der Ventilplatte größer ist als der Durchmesser des im Spulenkörper geführten Teiles des Ankers, und daß das mit der Abstufung zusammenwirkende Dämpfungsglied nur die Ankerbewegung gegen den Kern dämpft und begrenzt, während die Ventilplatte die Ankerbewegung bei der Schließbewegung des Ventils dämpft.

Das Dämpfungsglied, das den Anker umgibt, kann mit einem ausreichenden Volumen im Elektromagneten untergebracht werden. Dieses Dämpfungsglied wirkt mit der Abstufung zusammen. Der dadurch im Durchmesser vergrößerte Anker gibt genügend Raum, auch eine ausreichend dimensionsierte Ventilplatte unterzubringen, die die Schließbewegung des Ankers dämpft. Die Außenabmessungen des Elektromagneten können dabei gering gehalten werden. Die Anwendung übermäßiger Genauigkeit ist entbehrlich.

In den Unteransprüchen sind weitere vorteilhafte Ausgestaltungen der Erfindung gekennzeichnet.

Die Ventilplatte kann bei der Erfindung in sich elastisch ausgebildet sein und durch Verformung die Dämpfungswirkung ergeben. Es ist aber auch möglich, wie bei einer Variante vorgesehen, daß sich die Ventilplatte über eine Feder am Anker abstützt. Auf diese Weise wird mindestens ein Teil der Energie bei der Schließbewegung von der Feder aufgenommen. Dies entlastet die Ventilplatte.

Zur Verbindung der Ventilplatte mit der Abstützfeder schlägt die Erfindung einen zapfenartigen Ansatz an der Ventilplatte vor, der von der Abstützfeder umgeben ist.

Bei einer bevorzugten Ausführungsform der Erfindung ist die Abstufung als Flansch am ventilseitigen Ankerende gestaltet.

Insbesondere schlägt hierbei die Erfindung vor, daß der Flansch auch die Anlage für die Rückführfeder bildet.

Die Erfindung sieht weiter vor, daß das Dämpfungsglied vom Spulenkörper gehalten ist. Der Spulenkörper besteht in der Regel aus Kunststoff, also einem Bauteil das in der Regel in einer Form hergestellt wird. Die Ausgestaltung für die Befestigung des Dämpfungsgliedes erfordert hierbei keinen besonderen Aufwand.

Günstig ist es weiter, wenn der Spulenkörper außerhalb der Ankerführung einen zylindrischen Ansatz besitzt, daß dieser zylindrische Ansatz an seiner Außenfläche das Dämpfungsglied trägt und mit seiner Innenfläche eine Anlage für die Rückführfeder bildet. Auch bei dieser Bauweise wird der Spulenkörper für weitere Funktionen herangezogen.

Nach einem weiteren Merkmal der Erfindung besitzt das ringförmige Dämpfungsglied auf seiner Innenseite eine Abstufung, mit der es sich auf dem Ende des zylindrischen Ansatzes abstützt.

In der Zeichnung sind zwei Ausführungsbeispiele der Erfindung schematisch dargestellt. Es zeigen:
- Fig. 1: einen Längsschnitt durch einen erfindungsgemäßen Elektromagneten, der mit einem Ventilkörper verbunden ist und
- Fig. 2: ein abgewandeltes Ausführungsbeispiel, wobei der Ventilkörper im einzelnen nicht gezeigt ist und wobei die ventilseitige Ausführung des dargestellten Ankerendes nicht erfindungsgemäß ist.

Die Zeichnung zeigt die Elektromagneten in vergrößerter Darstellung. In der Regel haben Elektromagnete dieser Ausbildung einen Durchmesser von etwa 30 bis 40 mm.

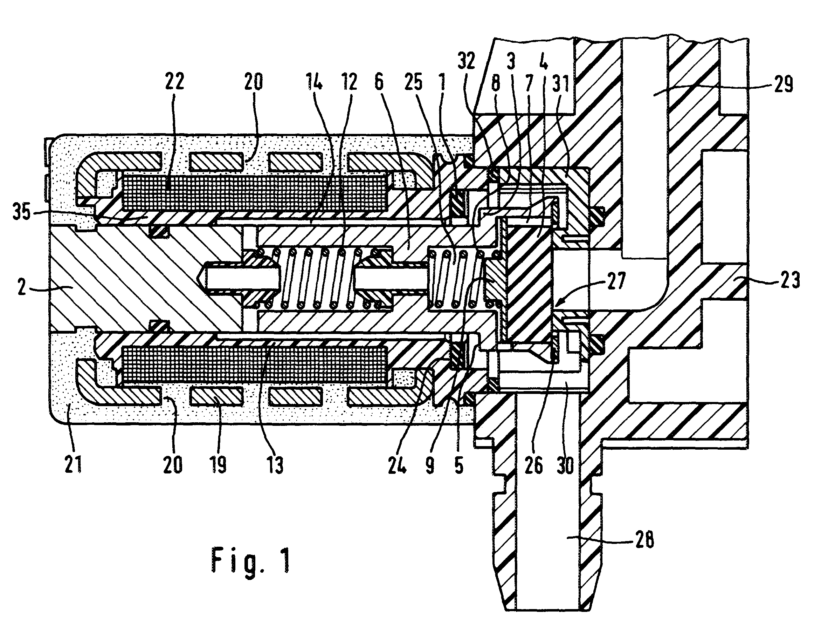

Bei dem Elektromagneten nach der Fig. 1 ist der magnetische Mantel mit 19 bezeichnet. In diesem Mantel 19 sind Ausnehmungen 20 vorgesehen, durch die die Vergußmasse 21 nach der Montage hindurch dringen kann, so daß alle Teile fest in die Vergußmasse eingebettet sind und die Vergußmasse auch den Außenmantel des Elektromagneten bildet.

Auf dem Spulenkörper 13, der auch die Führung 14 für den Anker 6 bildet, ist die Spule 22 angeordnet und der Spulenkörper erstreckt sich insbesondere in Richtung auf den Ventilkörper 23.

In den Teil 35 des Spulenkörpers 13 ist der Kern 2 eingesetzt, der in magnetischer Verbindung mit dem Mantel 19 steht und bei Beaufschlagung auf den Anker 6 einwirkt und diesen anzieht. Zwischen dem Kern 2 und dem Anker 6 ist beim Ausführungsbeispiel der Fig. 1 die Rückführfeder 12 angeordnet und drückt den Anker bei nicht beaufschlagter Spule 22 gegen den Ventilkörper 23. In dem ventilseitigen Bereich des Spulenkörpers 13 ist eine Abstufung 24 vorgesehen, so daß eine Auflage für das Dämpfungsglied 1 erhalten wird.

Am Anker 6 ist ein Ringbund 3 vorgesehen, der im Ausführungsbeispiel nach der Fig. 1 als Abstufung 5 gestaltet ist. Diese Abstufung 5 wirkt mit dem Dämpfungsglied 1 zusammen, wenn die Spule 22 beaufschlagt wird und der Anker 6 sich in Richtung gegen den Kern 2 bewegt. Dadurch wird das Ende dieser Ankerbewegung begrenzt und gedämpft.

Die Abstufung 5 besitzt eine Ausnehmung 7, in der die Ventilplatte 4 angeordnet ist. Diese Ventilplatte 4 besitzt einen zapfenartigen Ansatz 9 zur Führung der Feder 8. Diese Feder 8 ist in einer Ausnehmung 25 des Ankers untergebracht und bewirkt, daß die Ventilplatte 4 an die Halteelemente 26 am ventilseitigen Ende des Ankers 6 gedrückt wird, so daß der Anker bei der Beaufschlagung der Spule die Ventilplatte 4 mitnimmt und weiter, dar bei der Rückführbewegung durch die Federn 12 die Ventilplatte 4 gegenüber dem Anker gefedert ist. Auf diese Weise unterstützt die Feder 8 die elastische Dämpfungswirkung der Ventilplatte 4, wenn diese mit dem Ventil 27 zusammenwirkt.

Der Ventilkörper 23 besitzt zwei Leitungen, und zwar die Zuleitung 28 und die Ableitung 29. Durch eine Ausnehmung 30 im Einsatzteil 31 ist die Zuleitung 28 mit dem Ringraum verbunden, der die Abstufung 5 umgibt. Bei der Beaufschlagung der Spule 22 hebt sich das Ventil von seinen Sitz ab und verbindet die Zuleitung 28 mit der Ableitung 29.

Im gezeigten Ausführungsbeispiel ist das Einsatzteil 31, das dem Ventil zugeordnet ist, mittels der Dichtung 32 gegenüber dem Spulenkörper 13 abgedichtet.

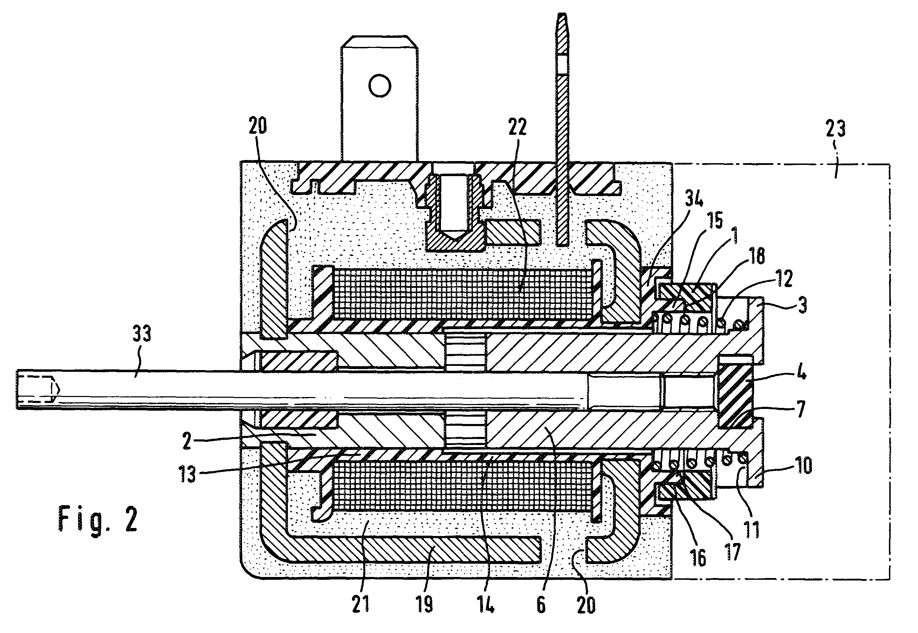

Das Ausführungsbeispiel nach der Fig. 2 unterscheidet sich von dem nach der Fig. 1 im wesentlichen dadurch, daß in den Anker 6 eine Ankerstange 33 eingesetzt ist, mit der beispielsweise eine Handnotbetätigung des Ventils im Ventilkörper 23 möglich ist.

Das dem Ventilkörper 23 zugewandte Ende des Spulenkörpers 13 ist mit einem Flansch 34 versehen, der einen zylindrischen Ansatz 15 trägt. Dieser zylindrische Ansatz 15 hält mit seiner Außenfläche 16 das Dämpfungsglied 1, das mit einer Abstufung 18 an der Stirnfläche des Ansatzes 15 anliegt. Die Innenfläche 17 des Ansatzes 15 dient der Führung der Rückführfeder 12, die sich am inneren Bereich des Flansches 10 an der Anlagefläche 11 abstützt.

Die äußeren Bereiche des Flansches 10 wirken mit dem Dämpfungsglied 1 zusammen.

Innerhalb des Ringbundes 3 ist eine Ausnehmung 7 vorgesehen, die die Ventilplatte 4 aufnimmt, die in ähnlicher Weise mit den nicht näher dargestellten Teilen des Ventilkörpers 23 zusammenwirkt, wie im Zusammenhang mit der Darstellung der Fig. 1 beschrieben worden ist. Die ventilseitige Ausführung des in Figur 2 dargestellten Ankerendes ist nicht erfindungsgemäß.

## Patentansprüche

1. Elektromagnet zur Betätigung eines Ventils, mit einer Spule (22), die einen Kern (2) umgibt und einem Anker (6), der im Spulenkörper (13) geführt ist und sich bei der Beaufschlagung zwecks Ventilöffnung gegen den Kern (2) bewegt, mit einer Feder (12) zur Rückführung des Ankers (6) und einer vom Anker (6) getragenen Ventilplatte (4) an dem dem Kern gegenüberliegenden Ankerende sowie einem Ringbund (3) am Anker, der mit einem den Anker umgebenden, die Ankerbewegung begrenzenden, elastischen Dämpfungsglied (1) zusammenwirkt, wobei der Anker (6) die elastisch nachgiebig ausgebildete Ventilplatte (4) in einer Ausnehmung (7) aufnimmt, **dadurch gekennzeichnet, daß** der Ringbund (3) von einer sich bis zum ventilseitigen Ende des Ankers (6) erstreckenden Abstufung (5) gebildet ist, die die Ventilplatte (4) umgibt, wobei der Durchmesser der Ausnehmung (7) zur Aufnahme der Ventilplatte (4) größer ist als der Durchmesser des im Spulenkörper (13) geführten Teiles des Ankers (6), und daß das mit der Abstufung (5) zusammenwirkende Dämpfungsglied (1) nur die Ankerbewegung gegen den Kern (2) dämpft und begrenzt, während die Ventilplatte (4) die Ankerbewegung bei der Schließbewegung des Ventils dämpft.

2. Elektromagnet nach Anspruch 1, **dadurch gekennzeichnet, daß** sich die Ventilplatte (4) über eine Feder (8) am Anker (6) abstützt.

3. Elektromagnet nach Anspruch 1 und 2, **dadurch gekennzeichnet, daß** die Ventilplatte (4) einen zapfenartigen Ansatz (9) aufweist, der von der Abstützfeder (8) umgeben ist.

4. Elektromagnet nach Anspruch 1, **dadurch gekennzeichnet, daß** die Abstufung (5) als Flansch (10) am ventilseitigen Ankerende gestaltet ist.

5. Elektromagnet nach Anspruch 4, **dadurch gekennzeichnet, daß** der Flansch (10) auch eine Anlagefläche (11) für die Rückführfeder (12) bildet.

6. Elektromagnet nach Anspruch 1, **dadurch gekennzeichnet, daß** das Dämpfungsglied (1) vom Spulenkörper (13) gehalten ist.

7. Elektromagnet nach Anspruch 1, **dadurch gekennzeichnet, daß** der Spulenkörper (13) außerhalb der Ankerführung (14) einen zylindrischen Ansatz (15) besitzt und daß dieser zylindrische Ansatz an seiner Außenfläche (16) das Dämpfungsglied (1) trägt und mit seiner Innenfläche (17) eine Anlage für die Rückführfeder (12) bildet.

8. Elektromagnet nach Anspruch 7, **dadurch gekennzeichnet, daß** das ringförmige Dämpfungsglied (1) auf seiner Innenseite eine Abstufung (18) aufweist, mit der es sich auf dem Ende des zylindrischen Ansatzes (15) abstützt.

## Claims

1. Electromagnet for actuating a valve, with a coil (22) surrounding a core (2) and an armature (6) guided in the coil body (13) and moved towards the core (2) when the valve is energized to open the valve, with a spring (12) for restoring the armature (6) and a valve plate (4) supported by the armature at the end of the armature opposite the core and a ring collar (3) on the armature acting together with an elastic damping member (1) surrounding the armature and limiting the armature movement, said armature (6) lodging the elastically and flexibly designed valve plate (4) in a recess (7), characterized in that the ring collar (3) is formed by a stepped surface (5) extending until the valve-side end of the armature (6), said stepped surface surrounding the valve plate (4), the diameter of the recess (7) for supporting the valve plate (4) being greater than the diameter of the part of the armature held in the coil body (13), and in that the damping member (1) acting together with the stepped surface (5) damps and limits only the armature movement towards the core (2) whereas the valve plate (4) damps the armature movement during the closing movement of the valve.

2. Electromagnet according to claim 1, **characterized in that** the valve plate (4) is supported via a spring (8) on the armature (6).

3. Electromagnet according to claim 1 and 2, **characterized in that** the valve plate (4) shows a stud-like projection (9) surrounded by the supporting spring (8).

4. Electromagnet according to claim 1, **characterized in that** the stepped surface (5) is designed as a flange (10) at the valve-side end of the armature.

5. Electromagnet according to claim 4, **characterized in that** the flange (10) also constitutes a supporting surface (11) for the restoring spring (12).

6. Electromagnet according to claim 1, **characterized in that** the damping member (1) is held by the coil body (13).

7. Electromagnet according to claim 1, **characterized in that** the coil body (13) has a cylindrical projection (15) outside the guideway of the armature (14) and in that said cylindrical projection supports the damping member (1) on its outer surface (16) and its inner surface (17) constitutes a support for the restoring spring (12).

8. Electromagnet according to claim 7, **characterized in that** the annular damping member (1) has a stepped surface (18) on the inside by which it is supported on the end of the cylindrical projection (15).

## Revendications

1. Electroaimant pour l'actionnement d'une soupape, comprenant une bobine (22), qui entoure un noyau (2), et une armature (6), qui est guidée dans le corps de bobine (13) et se déplace vers le noyau (2) lors de l'alimentation en vue d'une ouverture de soupape, un ressort (12) pour rappeler l'armature (6) et un plateau de soupape (4) porté par l'armature (6), à l'extrémité d'armature située à l'opposé du noyau, ainsi qu'un collet annulaire (3) sur l'armature, qui coopère avec un organe d'amortissement (1) élastique entourant l'armature et limitant son mouvement, l'armature (6) recevant dans un évidement (7) le plateau de soupape (4) réalisé sous une forme élastiquement flexible, caractérisé en ce que le collet annulaire (3) est formé d'un épaulement (5) qui s'étend jusqu'à l'extrémité du côté soupape de l'armature (5) et qui entoure le plateau de soupape (4), le diamètre de l'évidement (7) destiné à recevoir le plateau de soupape (4) étant plus grand que le diamètre de la partie de l'armature (6) qui est guidée dans le corps de bobine (13), et en ce que l'organe d'amortissement (1) coopérant avec l'épaulement (5) amortit et limite uniquement le mouvement de l'armature vers le noyau (2), tandis que le plateau de soupape (4) amortit le mouvement de l'armature lors du mouvement de fermeture de la soupape.

2. Electroaimant suivant la revendication 1, caractérisé en ce que le plateau de soupape (4) s'appuie, par l'intermédiaire d'un ressort (8), sur l'armature (6).

3. Electroaimant suivant l'une des revendications 1 et 2, caractérisé en ce que le plateau de soupape (4) présente une saillie en forme de tourillon (9) qui est entourée par le ressort d'appui (8).

4. Electroaimant suivant la revendication 1, caractérisé en ce que l'épaulement (5) est façonné en forme de bride (10) à l'extrémité du côté soupape de l'armature.

5. Electroaimant suivant la revendication 4, caractérisé en ce que la bride (10) forme également une surface d'appui (11) pour le ressort de rappel (12).

6. Electroaimant suivant la revendication 1, caractérisé en ce que l'organe d'amortissement (1) est maintenu par le corps de bobine (13).

7. Electroaimant suivant la revendication 1, caractérisé en ce que le corps de bobine (13) présente, à l'extérieur du guidage d'armature (14), une saillie cylindrique (15) et en ce que cette saillie cylindrique porte, sur sa surface externe (16), l'organe d'amortissement (1) et forme, avec sa surface interne (17), un appui pour le ressort de rappel (12).

8. Electroaimant suivant la revendication 7, caractérisé en ce que l'organe d'amortissement annulaire (1) présente, sur son côté interne, un épaulement (18) par lequel il s'appuie sur l'extrémité de la saillie cylindrique (15).
